# NEW EUROPEAN PATENT SPECIFICATION

(11) **EP 2 631 104 B2**
(45) Date of publication and mention of the opposition decision: **08.11.2023**
(45) Mention of the grant of the patent: 08.07.2015
(21) Application number: 12156390.2
(22) Date of filing: 21.02.2012
(51) Int. Cl.: B60L 15/00, B60L 15/20, B60L 3/00

(54) **DC-link decoupling circuit for parallel inverters**
Gleichspannungszwischenkreis-Entkopplungsschaltung für Parallelwandler
Circuit de découplage de liaison à courant continu pour inverseurs parallèles

(43) Date of publication of application: 28.08.2013
(73) Proprietor: ALSTOM Holdings, 93400 Saint-Ouen-sur-Seine (FR)
(72) Inventor: Barlini, Davide, I-20099 Sesto San Giovanni (Milano) (IT)
(74) Representative: Karaghiosoff, Giorgio Alessandro

(56) References cited:
- EP-A2- 1 610 450
- GRZEGORZ SKARPETOWSKI ET AL: "Analytical Calculation of Supply Current Harmonics Generated by Train Unit", POWER ELECTRONICS AND MOTION CONTROL CONFERENCE, 2006. EPE-PEMC 2006. 12TH INTERNATIONAL, IEEE, PISCATAWAY, NJ, USA, 30 August 2006 (2006-08-30), pages 1378-1384, XP031421813, ISBN: 978-1-4244-0121-5

## Description

The present invention relates to a DC-link decoupling circuit which is provided in combination with two inverters, the said inverters being connected in parallel to a common DC power supply line and each of the said inverters driving one different traction motor, switch means being provided for each of said two inverters for separating the corresponding inverter from said power supply line in case of failure.

The above disclosed bogie architecture is commonly used in electric locomotives.

Locomotives of this type are well known in the art and widely used. Particularly, this configuration is employed in combination with the use of AC motors.

In a typical locomotive, the electromotive force EMF is drawn from an overhead electrification line or in the form of a third rail, or is generated by a diesel engine or another kind of engine on board the locomotive.

The power signal drawn, for instance, from an overhead electric line may be an AC signal and is transformed and rectified. The AC signal at the output of the rectifier or converter is transformed into a DC signal and is transmitted to an inverter for transformation into a motor powering and controlling signal. This changes the DC signal into an AC power supply signal, having waveforms and parameters specially adapted to the desired movement conditions.

It is known to provide multiple bogies with multiple axles and more than one motor, the motors being designed to drive different axles of the same bogie or different bogies.

In this case, several inverters in parallel are generally used, which receive the power signal and each of which supplies power to at least one of the motors, i.e. each inverter powers different motors. The paper of Skarpetowski et al. "Analytical calculation of supply current harmonies generated by train unit" published at EPE PEMC 2006 discloses a device according to the preamble of claim 1.

In this type of locomotives, the inverters are connected in parallel to a common high voltage signal supply line, and hence all the components of said line are common to all the inverters and are connected to the inputs of each inverter. Since the units that form the inverters are generally equipped with a DC link capacitor, two inverters in parallel are generally problematic in the range of certain frequencies, due to the resonance of these capacitors and the stray inductances of the cabling.

In the prior art, this drawback is generally addressed by oversizing capacitors.

An alternative way of obviating to the above mentioned drawbacks consists in using bus bars with low parasitic inductances. Accordingly resonance frequencies are shifted to high values, with which the skin effect prevails.

Nevertheless, in case of malfunction of an inverter or a motor, the locomotive loses both motors controlled by the two inverters, because there is no way to isolate the faulty inverter or motor only. If the locomotive has two bogies, each with its drive motor, then in the above mentioned condition, traction by both bogies is lost.

The invention has the object of providing a locomotive as described hereinbefore, wherein the above described drawbacks of prior art DC-Links decoupling circuits particularly in locomotors can be obviated by simple, inexpensive and easy-to-use means, while improving construction efficiency and reducing costs.

The invention fulfills the above objects by a DC-link decoupling circuit in combination with two inverters which inverters are connected in parallel to a common DC power supply line, each inverter driving one different traction motor, switch means being provided for each of said two inverters, for separating the corresponding inverter from said power supply line in case of failure, the said DC-Link circuit being further provided with resonance oscillation attenuating/damping means in the form of an RL filter (resistor-inductor filter) decoupling the resonance condition of the inverters, i.e. of the input capacitors.

According to a further feature the said RL filter is interposed between the common power supply line and an input capacitor of each of the inverters.

A special construction of the filter includes an inductor for each branch of the power supply line connecting one of the inverters, which is connected in series between said common power supply line and said inverter and a resistor which is connected in parallel to said inductors and in parallel to the inputs of said two inverters, and which connects the two branches connecting the two inverters with each other.

The two inductors connected in series with the inverter inputs advantageously have the same inductance value.

According to an improvement, said two inductors have a common metal core.

According to yet another feature, a switch is connected in series to the input of each inverter and to its inductor in the connection branch, for separating the corresponding inverter from the power supply line.

The features of the present invention allow decoupling of the resonance between the input capacitors of the two inverters, further allowing separation of the inverters from power supply in case of malfunctioning. As more clearly explained in the following description, the traction currents at the input of the two inverters flow through the inductor and create a zero flow condition in the magnetic core and cause the reactor to be in a sort of equilibrium condition. At high frequencies (comprising also the resonance frequency) the reactor offers an impedance which is higher than the resistance 17 connected in parallel to the inductance 13. Current flows through the said resistance which damps the oscillations.

The invention also relates to an electric locomotive comprising at least one bogie and at least two electric motors, each driving at least one axle of at least one bogie or two different bogies,
each motor being controlled by at least one of two inverters, each of which inverters is powered by a common power supply line, switch means being provided for each of said two inverters, for separating the corresponding inverter from said power supply line in case of failure,
and which electric locomotive is provided with means which are connected to the inverters for decoupling the resonance condition of the inverters, i.e. the input capacitors of the inverters, the said means being a DC-Link decoupling circuit according to one or more of the above disclosed combination of features.

The invention relates also to a generic traction drive for supplying power to electric motors, particularly for driving one or more railroad bogies, which drive comprises a common high voltage power supply line for supplying power to at least two inverters connected in parallel to each other and to said power supply line, each of which inverters controls at least one different motor. According to the invention, said traction drive comprises means for decoupling the resonance condition of the inverters, i.e. the input capacitors of the inverters the said means being a DC-Link decoupling circuit according to one or more of the above disclosed combination of features.

Further features and improvements will form the subject of the dependent claims.

These and other features and advantages of the invention will be more apparent from the following description of a few embodiments shown in the accompanying drawings, in which:
Fig. 1 shows a diagram of the power supply signal generating circuit for supplying power to motors indicated by 2, having two inverters in parallel and a filter of the present invention.
Fig. 2 is a simplified circuit diagram of the filter for suppressing resonance between the input capacitors of the inverters operating in parallel.
Fig. 3 shows a diagram of the test for the filter of Fig. 2.
Fig. 4 shows the behavior of voltages in each of the connecting branches, represented by the capacitors C1 and C2 (input capacitors of the inverters) at the closing the switch S1, with the reaching of the frequency resonance and with the intervention of the attenuating/damping filter of the previous figures.
Fig. 5 shows the curve of current at the closing of the switch S1 and with the generation of the resonances, and the curve of the current with the intervention of the inductor only, and of the resistor in parallel to the inductor.

The functions and the aims of the DC-Link decoupling circuit according to the present invention, are more easy to understand in combination with the preferred application to which it is destined, namely a locomotive with a bogie architecture comprising at last two motors each one of which is driven by a dedicated inverter without any limitations for the scope of protection to uses of the said DC-Link in other fields where the similar conditions apply.

An electric locomotive 1 may have different configurations in terms of the number of inverters designed to control one or more motors of the bogies.

The power signal may be collected from an overhead line using a pantograph. If the signal is an AC signal first it has to undergo a transformation in a transformer. A line switch is provided between the pantograph and the transformer. The secondary of the transformer is connected to a rectifier, which turns the AC signal into a DC signal, whereupon the DC signal is supplied from said rectifier to the inputs of one or more inverters for controlling the motors of the bogies by a connection system known in the art as DC-link. The inverters change the input signal into a generally three-phase AC signal having optimized waveform and frequency, amplitude, etc. parameters, the latter varying according to the desired locomotive travel condition.

As a rule, these functions are widely known and familiar to a person of ordinary skill in the art.

It shall be noted that the disclosed example shall be intended without limitation. The high-voltage power signal may be provided in the form of a DC signal or may be generated by the conversion of other kinds of energy into electric power, such as in the case of diesel-electric locomotives, which use a diesel engine to generate electric power to be supplied to motors, using an alternator.

In short, the example shall not be intended as limiting the use of the invention to a single type of locomotive, rather it will be applicable to any condition in which multiple electric motors are required to be powered by multiple inverters, which shall be able to be individually isolated in case of malfunctioning, without affecting the operation of the remaining inverters and motors and without completely sacrificing the availability of a given traction force.

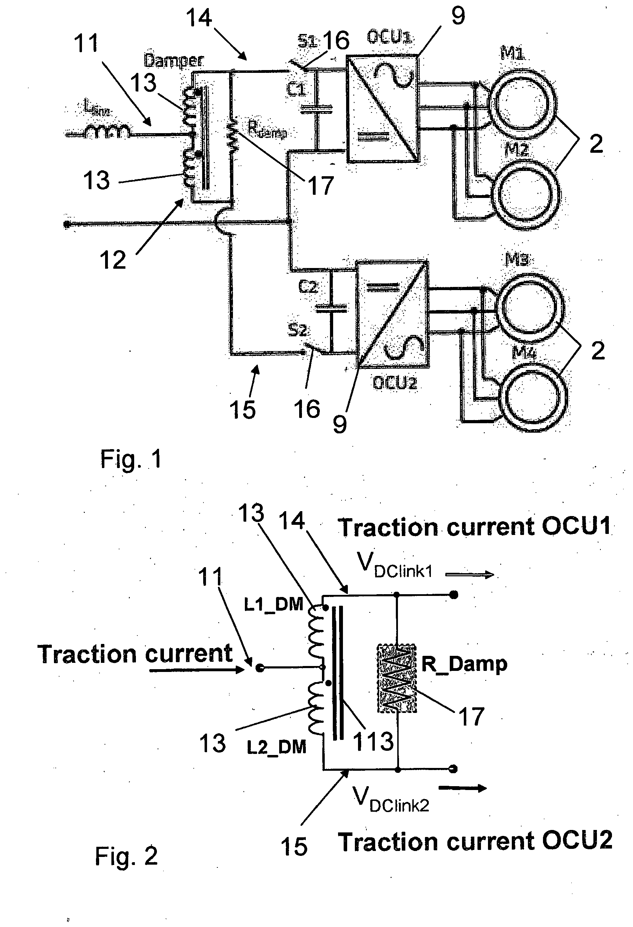

With more specific reference to the present invention, Fig. 1 shows the wiring diagram of the filter for attenuating resonance oscillations between the input capacitors C1, C2 of the inverters 9. The sources of such oscillation are the inverters driven by specific PWM: the frequency of the oscillation depends on the values of the dc-bus capacitors and on the cables inductance according to the cables length.

Branching occurs at an attenuator/damper 12 for damping the resonance oscillations that might occur between the two input capacitors C1 and C2.

Such attenuator/damper 12 consists of two inductors having equal inductance values or a single inductor with the power supply line 11 connected at its center, which inductors are referenced 14 and are connected in series with the input of the corresponding inverter 9 in the corresponding connecting branch 14, 15. A switch 16 is also provided in each of these branches, which is used to separate each of the two inverters 9 from the common DC signal supply line 11. A dissipation resistor 17 is provided between the two connecting branches 14 and 15, downstream and in parallel with the inductors 13.

The above described configuration of the attenuator/damper 12 is shown in greater detail in Figure 2. In this diagram like parts or parts having like functions as those of the previous Fig. 1 bear like numbers.

The power signal, indicated as traction current, is supplied to the two branches 14 and 15 via an inductor 13. The two inductors 13 have identical inductance values and a common metal core 113. The two branches 14 and 15 form DC connections for the traction signal supplied to the two inverters. These connections are indicated as VDClink1 and VDClink2, using the typical terminology of the art.

The resistor 17 is provided in parallel with the two branches 14 and 15.

This figure clearly shows the peculiarity of the attenuator/damper 12 of the present invention. This peculiarity is that the traction current of both inverters flows through the inductor and generates a zero flow in the magnetic core. Consequently, the reactor reaches a sort of equilibrium condition. At high frequencies (comprising also the resonance frequency) the reactor offers an impedance which is higher than the resistance 17 connected in parallel to the inductance 13. Current flows through the said resistance which damps the oscillations.

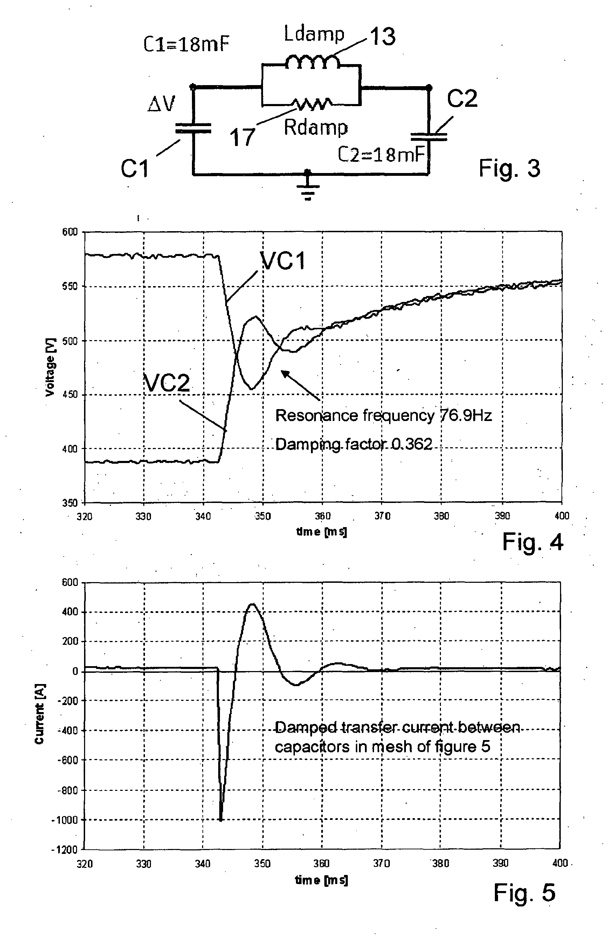

Figure 3 shows a wiring diagram of a test circuit for the attenuator/damper 12 for showing the damping capacities of the circuit according to the invention. Two capacitors C1 and C2 are connected in parallel through the damper 12. The capacitor are initially charged at different voltage and then the switch is closed. In other words a voltage step is applied at the circuit, which in turn produces disturbance source at every frequency. Only the voltage ripple at the resonance frequency is maintained and damped within one period. The damper 12 according to the invention comprises the inductor equivalent to the inductor 13 and the resistor 17, in parallel.

The potential difference relatively to the capacitor C2 is applied to the capacitor C1, and the switch S1 is in closed condition for causing the resonance condition.

Figure 4 shows the behavior of voltages to the capacitors C1 and C2 upon reaching the resonance frequency of the two capacitors.

At the point designated by the arrow in the chart of Figure 4, a resonance frequency of 76.09 Hz has been reached and the attenuator/damper 12 has operated with a damping factor of 0.362.

Typical values for the capacitance is 18mF.

The inductance Ldamp is the value which has to be considered to decouple the capacitance. In particular a typical value is Ldamp=476uH. In particular for Ldamp in a preferred embodiment the following relation is valid: Ldamp=L1_dm+L2_dm+ 2*Mutual.

The damping resistance Rdamp has values in the range from 0,1 to 0,5 Ohm and preferably of 0,3 Ohm.

It has to be noticed that these values (resonance frequency and damping coefficient) depend from the application and may vary with different values for the capacitance, the inductance and the resistance than the one used for the disclosed test.

Figure 5 shows the curve of current damping of the current flowing between the capacitor in the mesh of figure 3 when the inductor 13 and the resistor 17 are provided.

The oscillations are damped within approximately two periods. In absence of the CD-decoupling circuit according to the present invention oscillations would continue endlessly.

## Claims

1. DC-link decoupling circuit (12) in combination with two inverters (9) which are connected in parallel to a common DC power supply line (11) each inverter driving one different traction motor (2), switch means (16) being provided for each of said two inverters, for separating the corresponding inverter from said power supply line in case of failure,
the said DC-link decoupling circuit is provided with resonance oscillation attenuating/damping means in the form of a resistor-inductor filter (13,17)
and in that it includes an inductor (13) for each branch of the power supply line connecting one of the inverters, which inductor is connected in series between said common power supply line and said inverter and
**characterized in that** a resistor (17) is connected in parallel to said inductors and in parallel to the inputs of said two inverters, and connects the two branches connecting the two inverters with each other.

2. DC-link decoupling circuit according to claim 1 **characterised in that** the said RL filter is interposed between the common power supply line and an input capacitor of each of the inverters.

3. DC-Link according to claim 1, **characterised in that** said two inductors connected in series with the inverter inputs advantageously have the same inductance value.

4. DC-Link as claimed in claim 1 or3, wherein said two inductors have a common metal core (113).

5. DC-Link as claimed in one or more of the preceding claims, wherein a switch is connected in series to the input of each inverter and to its inductor in the connection branch, for separating the corresponding inverter from the power supply line.

6. An electric locomotive comprising at least one bogie and at least two electric motors, each driving at least one axle of at least one bogie or two different bogies,
each motor being controlled by at least one of two inverters, each of which inverters is powered by a common power supply line, switch means being provided for each of said two inverters, for separating the corresponding inverter from said power supply line in case of failure,
**characterized in that**
means are connected to the inverters for decoupling the resonance condition of the inverters, i.e. the input capacitors of the inverters, the said means being a DC-Link decoupling circuit according to one or more of the preceding claims 1 to 5.

7. A drive for supplying power to electric motors, particularly of one or more railroad bogies, which drive comprises a common high voltage power supply line for supplying power to at least two inverters connected in parallel to each other and to said power supply line, each of which inverters controls at least one different motor,
**characterized in that**
it comprises means for decoupling the resonance condition of the inverters, i.e. the input capacitors of the inverters the said means being a DC-Link decoupling circuit according to one or more of the preceding claims 1 to 5.

## Patentansprüche

1. Gleichspannungszwischenkreis-Entkopplungsschaltung (12) in Kombination mit zwei Umrichtern (9), die mit einer gemeinsamen Gleichstromversorgungsleitung (11) parallel geschaltet sind, wobei jeder Umrichter einen verschiedenen Traktionsmotor (2) antreibt, mit Schaltmitteln (16), die für jeden der zwei besagten Umrichter vorgesehen sind, zum Trennen des entsprechenden Umrichters von der besagten Energieversorgungsleitung bei Ausfall,
die besagte Gleichspannungszwischenkreis-Entkopplungsschaltung Resonanzschwingung-Abschwächungs- und Dämpfungsmittel aufweist, in Form von einem Resistor-Inductor-Filter (13,17),
und dass sie einen Induktor (13) für jede Verzweigung der Energieversorgungsleitung, die einen der Umrichter verbindet, aufweist, wobei der Induktor zwischen der besagten gemeinsamen Energieversorgungsleitung und dem besagten Umrichter in Reihe geschaltet ist
**dadurch gekennzeichnet, dass** ein Widerstand (17) mit dem besagten Induktor und mit den Eingängen der beiden besagten Umrichter parallel geschaltet ist und die zwei, beide Umrichter miteinander verbindenden Verzweigungen miteinander verbindet.

2. Gleichspannungszwischenkreis-Entkopplungsschaltung nach Anspruch 1, **dadurch gekennzeichnet, dass** der besagte RL-Filter zwischen der gemeinsamen Energieversorgungsleitung und einem Eingangskondensator von jedem der Umrichter zwischengeschaltet ist.

3. Gleichspannungszwischenkreis nach Anspruch 1, **dadurch gekennzeichnet, dass** die zwei besagten mit den Umrichtereingängen in Reihe geschalteten Induktoren vorzugsweise denselben Induktivitätswert aufweisen.

4. Gleichspannungszwischenkreis nach Anspruch 1 oder 3, wobei die zwei besagten Induktoren einen gemeinsamen Metallkern (113) aufweisen.

5. Gleichspannungszwischenkreis nach einem oder mehreren der vorangegangenen Ansprüche, wobei ein Schalter mit dem Eingang jedes Umrichters und mit seinem Induktor in der Anschlussverzweigung in Reihe geschaltet ist, zum Trennen des entsprechenden Umrichters von der besagten Energieversorgungsleitung.

6. Elektrische Lokomotive umfassend mindestens ein Drehgestell und mindestens zwei Elektromotoren, wobei jeder Motor mindestens eine Achse des mindestens einen Drehgestells oder von zwei verschiedenen Drehgestellen antreibt,
wobei jeder Motor von mindestens einem der beiden, jeweils durch eine gemeinsame Energieversorgungsleitung gespeisten Umrichter gesteuert wird, wobei Schaltmittel für jeden der beiden Umrichter vorgesehen sind, zum Trennen des entsprechenden Umrichters von der besagten Energieversorgungsleitung bei Ausfall,
**dadurch gekennzeichnet, dass**
Mittel mit den Umrichtern verbunden sind, um den Resonanzzustand der Umrichter zu entkoppeln, d. h. die Eingangskondensatoren der Umrichter, wobei die besagten Mittel eine Gleichspannungszwischenkreis-Entkopplungsschaltung sind, nach einem oder mehreren der vorangegangenen Ansprüche 1 bis 5.

7. Antrieb zur Energieversorgung von Elektromotoren, insbesondere von einem oder mehreren Eisenbahn-Drehgestellen, wobei der Antrieb eine gemeinsame Hochspannungsversorgungsleitung zur Energieversorgung von den mindestens zwei miteinander und mit der besagten Energieversorgungsleitung parallel geschalteten Umrichter umfasst, wobei jeweils ein Umrichter mindestens einen verschiedenen Motor steuert,
**dadurch gekennzeichnet, dass**
er Mittel zur Entkopplung des Resonanzzustandes der Umrichter, d. h. der Eingangskondensatoren der Umrichter umfasst, wobei die besagten Mittel eine Gleichspannungszwischenkreis-Entkopplungsschaltung sind, nach einem oder mehreren der vorangegangenen Ansprüche 1 bis 5.

## Revendications

1. Circuit de découplage de liaison à courant continu (12) en association avec deux inverseurs (9) montés en parallèle avec une ligne d'alimentation en courant continu (11), chaque inverseur entraînant un moteur de traction (2) différent, un moyen interrupteur (16) étant prévu pour chacun desdits deux inverseurs, pour séparer l'inverseur correspondant de ladite ligne d'alimentation en cas de panne,
ledit circuit de découplage de liaison à courant continu est équipé d'un moyen d'atténuation/amortissement d'oscillations de résonance en forme de filtre à résistance-inducteur RL (13, 17) et en ce que comprend un inducteur (13) pour chacune des branches de la ligne d'alimentation qui relient l'une des inverseurs, ledit inducteur étant monté en série entre ladite ligne d'alimentation commune et ledit inverseur, et
**caractérisé en ce qu'**une résistance (17) est montée en parallèle à lesdits inducteurs et en parallèle à les entrées desdits deux inverseurs et relie les deux branches de liaison des deux inverseurs entre elles.

2. Circuit de découplage de liaison à courant continu selon la revendication 1, **caractérisé en ce que** ledit filtre RL est interposé entre la ligne d'alimentation commune et un condensateur d'entrée de chacun des inverseurs.

3. Liaison à courant continu selon la revendication 1, **caractérisé en ce que** lesdits deux inducteurs montés en série avec les entrées des inverseurs ont avantageusement la même valeur d'inductance.

4. Liaison à courant continu selon la revendication 1 ou 3, dans lequel lesdits deux inducteurs ont un noyau métallique commun (113).

5. Liaison à courant continu selon une ou plusieurs des revendications précédentes, dans lequel un interrupteur est monté en série avec l'entrée de chaque inverseur et à son inducteur dans la branche de liaison, pour séparer l'inverseur correspondant de la ligne d'alimentation.

6. Locomotive électrique comprenant au moins un bogie et au moins deux moteurs électriques, chacun entraînant au moins un essieu d'au moins un bogie, ou deux bogies différents,
chaque moteur étant commandé par au moins un des deux inverseurs, chacun desdits inverseurs étant alimenté par une ligne d'alimentation commune, des moyens interrupteurs étant prévus pour chacun desdits deux inverseurs, pour séparer l'inverseur correspondant de ladite ligne d'alimentation en cas de panne, **caractérisé en ce que**
des moyens sont reliés aux inverseurs pour découpler l'état de résonance des inverseurs, c'est-à-dire les condensateurs d'entrée des inverseurs, lesdits moyens étant un circuit de découplage de liaison à courant continu selon une ou plusieurs des revendications précédentes 1 à 5.

7. Entraînement pour alimenter électriquement des moteurs électriques, notamment ceux d'un ou plusieurs bogies, ledit entraînement comprenant une ligne d'alimentation haute tension commune pour alimenter électriquement au moins deux inverseurs reliés en parallèle entre eux et à ladite ligne d'alimentation, chacun desdits inverseurs commandant au moins un moteur différent, **caractérisé en ce**
**qu'**il comprend des moyens pour découpler l'état de résonance des inverseurs, c'est-à-dire les condensateurs d'entrée des inverseurs, lesdits moyens étant un circuit de découplage de liaison à courant continu selon une ou plusieurs des revendications précédentes 1 à 5.
